Europäisches Patentamt

European Patent Office

Office européen des brevets

(11) Publication number: **0 038 894**
**B1**

# EUROPEAN PATENT SPECIFICATION

(45) Date of publication of patent specification: **24.09.86**

(51) Int. Cl.⁴: **G 01 F 23/30**

(21) Application number: **80304760.4**

(22) Date of filing: **30.12.80**

(54) **Fuel level gauge.**

(30) Priority: **15.03.80 JP 33883/80 u**
**15.03.80 JP 33884/80 u**

(43) Date of publication of application:
**04.11.81 Bulletin 81/44**

(45) Publication of the grant of the patent:
**24.09.86 Bulletin 86/39**

(84) Designated Contracting States:
**DE FR GB IT SE**

(56) References cited:
**FR-A-2 115 093**
**FR-A-2 414 191**
**GB-A- 980 908**

(73) Proprietor: **NIPPON MEKTRON, LTD.**
**12-15, 1-Chome Shiba Daimon**
**Minato-ku Tokyo (JP)**

(72) Inventor: **Tanaka, Yasuyuki**
**531-203 Taku, Ushiku-Machi**
**Inashiki-Gun, Ibaraki Pref 300-12 (JP)**

(74) Representative: **Jones, Colin et al**
**W.P. THOMPSON & CO. Coopers Building**
**Church Street**
**Liverpool L1 3AB (GB)**

Courier Press, Leamington Spa, England.

## Description

This invention relates to a liquid fuel level gauge, for example a fuel gauge for use in vehicles or the like and, more particularly, the invention relates to a construction of a vertically set liquid fuel level gauge having a contact member in contact with a resistance body of the vertically set gauge, said contact member being attached to a float.

For measuring the amount of fuel remaining in a tank of vehicles such as automobiles or the like, the conventional method consists mainly in using a float adapted to move up and down according to changes in the height of the fuel surface, converting the displacement of the float to an arcuate motion of an electric contact point at the end of an arm connected to the float, detecting the change in the height of the fuel surface as an electric signal devised from a resistance coil along which said contact point slides, and using said electric signal to indicate the remaining amount of fuel by means of a bimetal or coil-type receiver unit.

Such conventional method has several drawbacks, such as an unsatisfactory accuracy of the coil resistance body itself, a short range of sliding movement, low degree of absolute accuracy for the displacement of the fuel surface. Moreover, since the float is connected to one end of said arm, ample space is required for installation of the fuel gauge and, when the fuel tank is not of a simple shape, the resistance value varies nonlinearly with the amount of fuel in the tank.

As means for overcoming such drawbacks, various kinds of vertically set fuel gauges have been proposed in recent years. One such vertically set fuel gauge has a resistance body extending in a vertical direction i.e., perpendicular to fuel surface in the fuel tank. In such case, the resistance body is formed of an aluminium base plate having its surface treated by anodic oxidation or a base plate of paper impregnated with phenolic resin and having a conductive metal foil of high specific resistance applied either to one surface or both surfaces thereof, a suitable resistance pattern being formed in the metal foil by etching. Around this resistance body are provided a float adapted to move up and down, following changes in the height of the fuel surface, a contact member attached to the float and adapted to contact the resistance body for detecting a change in resistance value, and an external casing designed to protect said elements and formed with orifices for damping a sudden change in the height of the fuel surface. In this case, it is in common with the conventional method that an electric signal represented by a change in resistance value is transmitted to a direct read-out meter or differential coil-type meter to indicate the amount of the fuel in an analog or digital manner, and said electric signal is treated by AD conversion to indicate the amount of fuel in a digital manner. Particularly, however, the resistance pattern achieved by etching or similar treatment renders it possible to enhance absolute accuracy of the resistance pattern in a simple manner and to make the resistance pattern conform to an irregular shape of fuel tank, thus ensuring a linear relationship between the amount of fuel and the resistance. Moreover, since the resistance body can be provided in slender form, it is easy to enhance an irregular function of the change in the height of the fuel surface. Besides, owing to the action of the orifices of the external casing, it is also possible to prevent an abrupt change in the height of the fuel surface which may arise from swinging movement of the vehicle from reaching the float. Consequently, it is possible to apply a system of high accuracy to an indication meter, which is characteristic of vertically arranged fuel gauges of this kind.

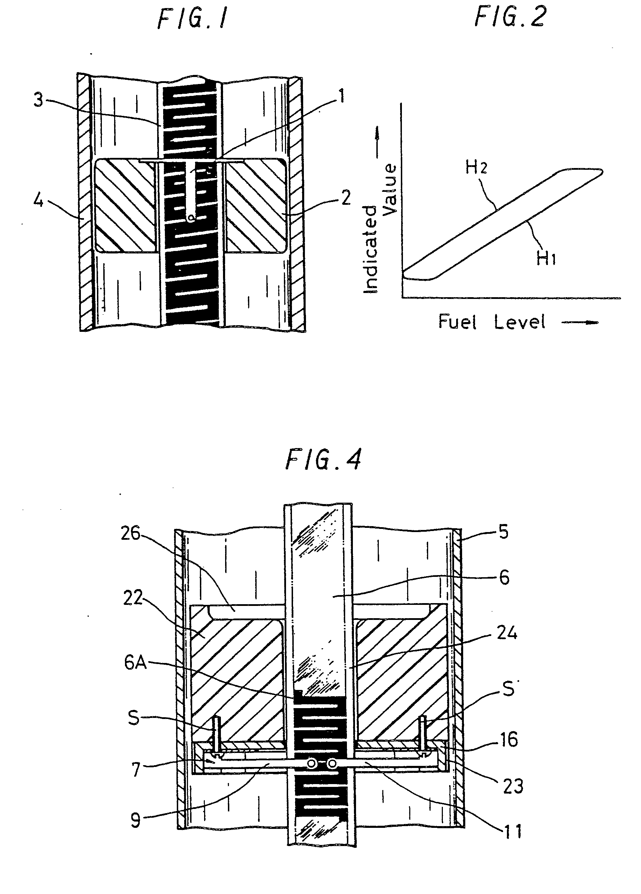

However, as shown in Fig. 1 of the accompanying drawings, in the conventional system, wherein the contact member 1 attached to the float 2 in the external casing 4 is arranged parallel to the lengthwise direction of the resistance body 3, it has been confirmed that there occurs a difference in sliding frictional resistance of the contact member, depending on whether the contact member 1 is sliding upwardly or downwardly along the resistance body 3. Namely, in such an example as shown in Fig. 1 of the accompanying drawings, wherein the contact member 1 is attached to the upper end of the float 2 and the lower free end of the contact member 1 is in sliding contact with the resistance body 3, frictional resistance is smaller during ascent of the contact member 1 than during its descent in relationship with buoyancy of the float 2. Consequently, the hysteresis of resistance value upon the up and down movement of the float tends to become large, thus lowering the measuring accuracy of the fuel gauge. More apparently, as shown in Fig. 2 of the accompanying drawings, when the float is rising and its buoyancy comes into equilibrium with the frictional resistance of the contact points of the contact member 1 against the resistance body 3, such point $H_1$ is read out as the level of the fuel surface at that time, whereas, when the float 2 is descending and its gravity comes in equilibrium with the frictional resistance at the contact point, such point $H_2$ is read out as the level of the fuel surface. Therefore, a reading during raising or descent of the float 2 cannot be consistent with the actual amount of displacement of the fuel surface in practice. For this reason, hysteresis of resistance values of the resistance body will become large owing to the up and down movement of the float 2 and reduces the accuracy of measurement by the fuel gauge by a large factor.

On the other hand, the fuel surface in the fuel tank tends to tilt or swing in a complicated manner according to the movement of the vehicle or ship so that the float too will swing in the same manner. In particular, when there occurs an abrupt swing or inclination of the fuel surface, external force is transmitted to the point of contact between the contact member 1 and the resistance body 3 via the float 2 and, when the float is forced to swing or tilt irregularly and violently, the contact member will be pressed hard against the resistance body 3, thus leading to the danger of permanent deformation of the contact member 1 and change of its spring constant. If so, it is impossible to maintain an optimum electrical contact between the contact member 1 and the resistance body 3, thus fundamentally impairing the accuracy of measurement, which should be considered a very unfavourable condition.

FR—A—2115093 discloses a vertically set fuel gauge having a double filament resistance element wound round a vertical fuel withdrawal tube and GB—A—980908 discloses a coiled resistance wire extending along one side of a vertical fuel withdrawal tube and a contact strip along the opposite side. Interconnected spring contacts mounted on a float interconnect the two filaments of FR—A—2115093 or the resistance wire and the contact strip of GB—A—980908 so that the resistance value in both cases provides a measure of the fuel in the tank. GB—A—980908 also discloses the possibility of the resistance element being made of a metal foil or film. However, in FR—A—2115093, the spring contacts extend upwardly to their free ends and in GB—A—980908, they extend downwardly to their free ends, so that, in both cases, the above described disadvantage of a high hysteresis of the resistance value is present.

An object of the present invention is to provide a vertically set liquid fuel level gauge which can resolve several problems or drawbacks inherent in the conventional gauge, already explained hereinbefore.

Another object of the invention is to provide a vertically set liquid fuel level gauge suitable for reducing error in the indicated value of liquid surface level, which error may arise from the difference in frictional resistance following the up and down sliding of a contact member on a vertical resistance body, and at the same time, for ensuring a smooth optimum condition of contact between the contact member and the resistance body even in the case of tilting or swinging of the fuel surface.

According to the present invention, a liquid fuel level gauge having a vertically set elongate resistance body, a float having a hole through which the resistance body passes, and a contact member supported on the float and having electrical contact fingers engaging the resistance body, whereby the effective electrical resistance of the resistance body depends upon the position of the float along the resistance body and provides an indication of the liquid level so detected by the float, is characterised in that the contact fingers extend substantially perpendicular to the direction of sliding along the resistance body and engage opposite faces of the substantially flat resistance body in opposing relationship, and in that the hole provided in the float or a hole in a support block via which the contact member is attached to the float is only slightly larger than the cross section of the resistance body and thereby acts as a guide hole guiding the sliding movement of the contact member.

In a preferred embodiment, the contact elements are formed in an integral body of conductive resilient metal plate by punching and they are provided as a pair of contact point fingers or preferably as two pairs. Particularly, in the case, wherein the contact member of said contact elements is provided with two pairs of contact point fingers, it becomes possible to eliminate an undesirable rotary moment imposed on said contact point fingers.

In preferred embodiments of the present invention, the contact point of the contact member for sliding contact with the resistance body is shaped into an oblong or ellipse extending in the direction of sliding, whereby it is possible to reduce the difference in upward or downward sliding resistance of the contact point in contact with the resistance body and to prevent jumping of the contact point, thereby enhancing the accuracy of measurement of the liquid surface.

Also, in preferred embodiments of the present invention, the bottom of an external casing for the vertically set fuel gauge is formed so as to be raised at its centre so that adverse influences on the structure of the contact member can be avoided, such bad influences being likely to occur due to dust or impurities of water.

The invention will be further described with reference to the accompanying drawings, wherein like numerals designate like parts throughout, the present invention can be better understood by those skilled in the art and wherein:—

Fig. 1 is a conceptual cross-sectional view showing the structure of a contact member in a vertically set fuel gauge according to the conventional system;

Fig. 2 is a graph, illustrating hysteresis with respect to the sliding direction of the contact member of Fig. 1;

Fig. 3 is an exploded perspective view showing inverted a structure assembly of contact member in a vertically set fuel gauge according to a preferred embodiment of the present invention, together with part of an external casing;

Fig. 4 is a vertical sectional view of the liquid level gauge, taken along a central cross-section of the structure in assembled form of Fig. 3;

Fig. 5 is a plan view of a support block for the contact elements of the gauge of Fig. 3;

Fig. 6 is a central cross-section of the support block of Fig. 5;

Fig. 7 is a developed view of a contact member of the gauge of Fig. 3;

Fig. 8 is a perspective view of a float in another preferred embodiment of the present invention, concurrently serving the function of a support block;

Fig. 9 is a conceptual enlarged view of a contact condition between the contact point of the contact member and the resistance body of Fig. 1;

Fig. 10 is a conceptual perspective view showing the structure of a contact member in part in a vertically set fuel gauge according to the present invention;

Fig. 11 is a conceptual cross-sectional view of the bottom construction of an external casing for a vertically set fuel gauge according to the conventional system; and

Fig. 12 is a conceptual cross-sectional view of the bottom construction of an external casing for a vertically set fuel gauge according to the preferred embodiment of the present invention.

Figs. 1 and 2 illustrating the prior art, have already been described.

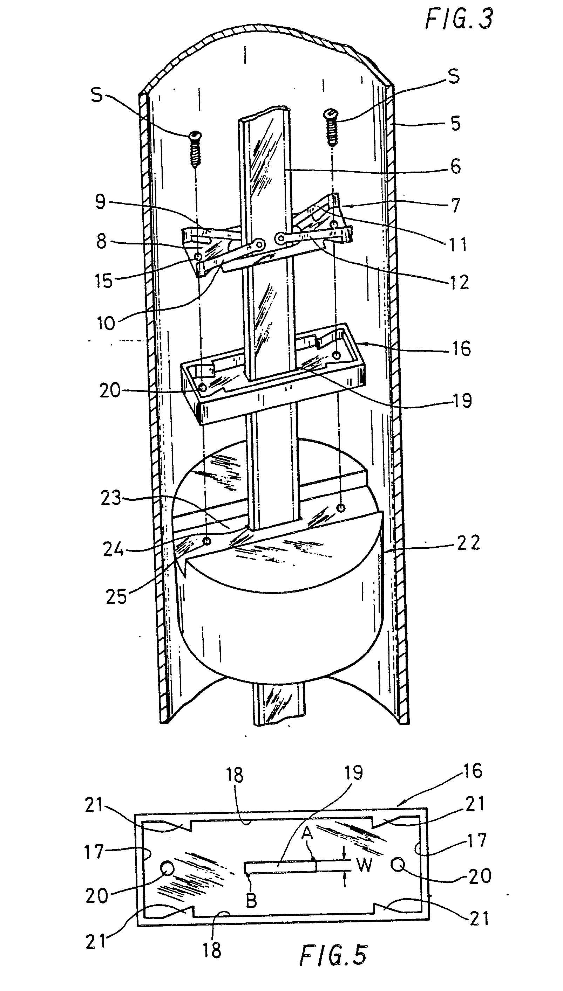

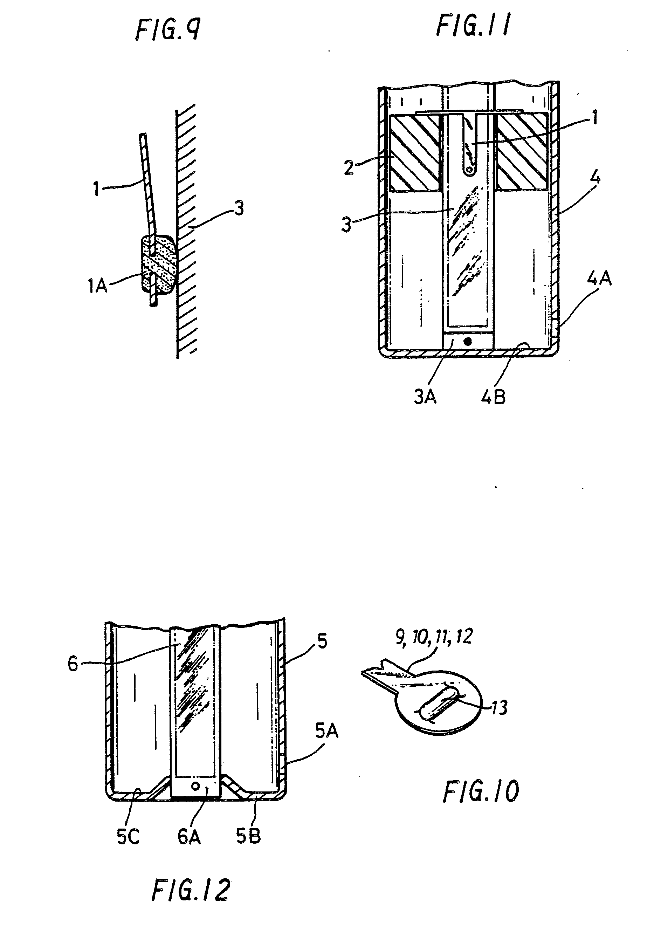

Referring now to Figs. 3 to 6, for example, an external casing 5 of the required diameter is formed from an aluminium material by punching and is provided with orifices (not shown, but see the orifice 5A in Fig. 12) in the proximity of its upper and lower ends respectively for damping the effect of an abrupt change in fuel surface. A flat elongate resistance body 6 is disposed in the casing 5 so as to extend along the axis thereof in the vertical direction. A contact member 7, supported by a support block 16 on a float 22, cooperates with the resistance body in the manner hereinafter described. The bottom (not shown; but again see Fig. 12), of the external casing 5 is inclined downwardly towards its external circumference so as to inhibit small solid material contained in the fuel from precipitating inside the casing 5 and so impairing operation of the contact member 7 and the resistance body 6. The resistance body 6 may have its base material formed of paper impregnated with phenolic resin and having the required circuit pattern 6A of the resistance element formed thereon. But, to take into account the problem of possible warping of the base material, it is preferable to form the required circuit pattern 6A of the resistance element by etching a chromium foil pasted onto an iron plate or metal plate whose front face illustrated has been subjected to an electrical insulating treatment or onto an aluminium plate treated by anodic oxidation. Though not shown in the drawings, the rear surface of the resistance body 6 may be formed with an earth circuit pattern. Also, some other pattern may be provided either on the face carrying the said required circuit pattern or on the face carrying the earth circuit pattern, to enable a warning signal of residual fuel to be derived.

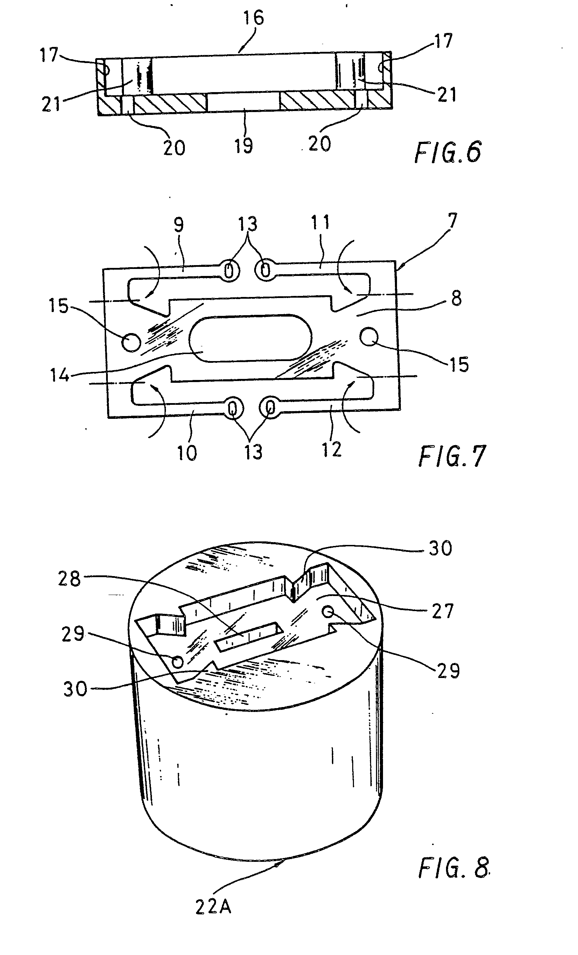

As is apparent from Figs. 3 and 7, the contact member 7 may be formed in an integral body from a conductive resilient metal plate by punching. It consists of a base portion 8 confronting the support block 16, two pairs of opposed parallel contact fingers 9 to 12 extending from four corners of the base portion 8, and contacts 13 of suitable height attached to the free end of each finger. An opening 14 is formed in the centre of the base portion 8 for reception of the resistance body 6 and at least several holes 15 are formed in the base portion 8 enabling the contact member 7 to be fixed to the support block by means of screws S. As shown in Fig. 7 of the drawings, each contact 13 is preferably shaped in elliptical or rounded oblong form extending in the direction of its sliding and contact with the resistance body 6 for reducing hysteresis. Also as shown in Fig. 7, when the fingers 9 to 12 are bent in the manner indicated by the arrows, they confront each other so as to pinch the resistance body 6 from both sides until they can slide in contact with the resistance body 6 while being arranged to extend in the horizontal direction perpendicular to the direction of sliding. According to this arrangement of the contact fingers 9 to 12, hysteresis upon their up and down sliding contact with the resistance body 6 can be reduced remarkably and contact pressure of the contacts 13 with the resistance body may also be reduced, thus prolonging the life of the fingers. As illustrated, in the preferred embodiment with two pairs of contact fingers, such arrangement is considered preferable in that it is possible to offset a rotary and bending moment imposed on the base portion 8 of the contact member 7 through the contact fingers as compared with cases where, for example, the contact fingers 9, 10 or 11, 12 are arranged in the form of one pair only.

Incidentally, while the contact fingers are formed with equal width and length and the contact member 7 as a whole is constructed in a symmetric manner as shown in the drawings, it may also be considered effective for the width or length or mass of the contact fingers to be made different from one another, or for some material, whether analogous or heterogenous, to be pasted onto the contact member, to inhibit sympathetic vibration of the contact fingers due to external vibration. In this preferred embodiment, the contact fingers 10, 12 engage the said required circuit pattern 6A of the resistance body and the other contact fingers 9, 11 engage the earth circuit pattern on the back surface thereof but converse arrangements will not cause any problem whatsoever nor do they cause any discrepancy in the procedure of assembling in each case.

As illustrated in Figs. 3, 5 and 6, the support block 16 in which is received the contact member 7 is shaped in rectangular form. The block 16 may be integrally cut out or extruded from a material of DURACON (Trade Mark) or the like and is provided with at least a rectangular bottom and lateral walls 17 and 18. The bottom has a central rectangular guide hole 19 for reception of the resistance body 6 and holes 20 aligned with the fixing holes 15 for the contact member 6. As shown in Fig. 5, the width W of the guide hole 19 may be such that even when the float 22 is twisted to the maximum extent possible at which the diagonal points A and B of the block 16 come into engagement with the resistance body, the two contacts 9 and 12, for example, of the contact fingers 9 to 12 remain in contact with the resistance body and none of the contacts 9 to 12 can undergo any permanent transformation or change in spring constant. Typically, it is desirable to make said width W about 1 mm larger than the thickness of the resistance body 6. Particularly, as shown in the drawings, in the case wherein inwardly inclined projections 21 are formed adjacent the two ends of both lateral walls 18, the contact member 7 may be positioned by means of said projections 21 and the four lateral walls 17 and 18. The projections 21 may serve especially to hold the proximity of root portions of the contact fingers 9 to 12, thus regulating the pressure of sliding contact with the resistance body 6 automatically and most suitably. It is thereby made easy to bend the contact fingers, to adjust contact pressure with the resistance body and to assemble the contact member 7 with the support block 16. In the preferred embodiment, the projections 21 for regulating contact pressure are constituted so as to be formed with the other parts in an integral body, but, as explained already before, if a sympathetic vibration-preventive means is applied to the contact fingers, the projections will be improved if they can be adjusted or fixed separately and movably so that it becomes possible to impart the most suitable contact pressure to each of the contact fingers separately.

The support block 16 holding the contact member 7 can be attached to the float 22. In this case, as shown in Fig. 4 which is an upside-down view, the bottom of the float 22 is formed with a groove 23 of a depth sufficient to receive the support block 16. The central part of the float is formed with an insert hole 24 for receiving the resistance body 6 therein and also with screw holes 25 for fixing the support block 16 and the contact member 7. As shown in the drawings, it is possible to form the float 22 into a circular column of suitable buoyant material, such as nitrile phenol foaming resin, in conformity with the shape of the external casing 5. The recess indicated at 26 in Fig. 4 can be provided as an escape portion for a metal attached to a lid body of the external casing and also for terminals or the like.

In the aforesaid preferred embodiment, the contact member 7 is attached to the float 22 through the support block 16 but, by selecting a suitable material for the float, it is possible to form such float 22A, as shown in Fig. 8, with a reception portion 27 for the contact member 7 to perform the function of the support block 16, a guide hole 28, fixing holes 29 and projections 30 in an integral manner. In such an arrangement, the number of necessary parts can be further reduced and low costs can be expected.

As described hereinbefore, with respect to the assembly structure of the contact member in a vertically set fuel gauge, the contact member is such that it slides in contact with the resistance body along opposite sides of the latter in a confronting manner and is oriented horizontally parallel to fuel surface. It has been confirmed that hysteresis of up and down sliding of the contact member can be reduced satisfactorily, as compared with the arrangement of a contact member along the lengthwise direction of a resistance body inherent in the conventional system. Thus, according to the present invention, the support block 16 or the float 22A serves to regulate the relationship of sliding contact between the contact member and the resistance body, thereby simplifying the assembling operation. Moreover, the support block 16 or the float 22A is provided with projections 21 or 30 for automatically regulating sliding contact pressure between the contact fingers of the contact member and the surface of the resistance body so that, not only can an operation to adjust contact point pressure during the assembling operation of the contact member be omitted, but also contact pressure can be maintained for use over long periods of time in a most suitable manner. Moreover, even if complex external vibration, such as running vibration of vehicles, is imposed on the float through the fuel surface and the float 22 is caused thereby to tilt or swing irregularly, said support block 16 can ensure a smooth and satisfactory contact between the resistance body and the contact member, thereby effectively eliminating bad influences, such as permanent deformation of the contact member or a change in spring constant. So, the assembly structure of the present invention is most suitable for measuring the level of a fuel surface with high accuracy and reliability.

As shown in Figs. 1 and 9, the contact member 1 for use in this kind of fuel gauge has heretofore been formed of a thin phosphor-bronze plate or beryllium-copper plate and the contact point 1A at the free end of said contact member is formed into a bottom-like shape which is fixed by welding, enlarging or fastening means. In view of the contact surface between said contact point 1A and the resistance body 3, such condition approximately amounts to a point contact at the initial stage, causing no serious trouble but, during its use over long periods of time, it usually tends to wear out and increase its contact area until contact resistance becomes substantially increased, leading to an extremely undesirable condition. For the material of the contact point 1A, cheap copper alloy is used in general but the increase in contact area, as mentioned above, will result in lowering the contact surface per unit area and an oxidized film formed on the contact point cannot be removed naturally so that such tendency presents itself as a problem in the accuracy of measurement. For this reason, the contact point has to be formed of a precious metal, such as palladium, gold or platinum, making the structure of the contact member very expensive in manufacture.

According to the preferred embodiment of the present invention, as shown in Fig. 10, the contact point 13 is extruded by pressing so as to project from the contact member 9, 10, 11, 12 and is formed in an integral manner into an oblong with rounded ends and extends in the sliding direction. When the contact point 13 is shaped in slender form in the sliding direction, its contact surface with the resistance body, in use for long periods of time, can be maintained at an almost constant level. Consequently, it is possible to maintain contact pressure at a low level in stable condition and to lessen its wear due to rubbing contact with the resistance body. Therefore, even when using cheap copper alloy for the material of the contact member 9, 10, 11, 12, it is possible to remove an oxidized film formed on the surface of the contact point 13 very easily. Moreover, when the contact point 13 is shaped in slender form, as mentioned above, it is possible to reduce resistance during the transfer of said contact point between the loops of the circuit pattern of the resistance body and to prevent jumping of the contact point, all of which may be taken as concurrent advantages.

In this kind of fuel gauge, as mentioned above, the resistance body vertically set in the external casing is arranged in the fuel tank, but, as shown in Figs. 1 and 11, dust or impurities of water in the fuel tank are likely to enter the external casing 4 through its orifice 4A, and such impurities tend to become heaped at the bottom 4B of the external casing 4. Since the lower end 3A of the resistance body 3 is positioned at the bottom 4B of the external casing 4, such heaped impurities will gradually come into contact with the lower end 3A of the resistance body 3 so that there occurs the danger of accelerating the deterioration of the resistance pattern. On the other hand, such bad tendency increases the danger of shorting the resistance pattern and the circuit pattern which will lower the accuracy of measurement to an extreme extent. Such impurities having entered the external casing 4 will not flow out naturally from the external casing 4 but increase in heaps at all times. Under these circumstances, in order to avoid this inconvenience, the lower end 3A of the resistance body, for example, may be so arranged as to be spaced apart from the bottom 4B of the external casing which may look like some solution of said inconvenience at a glance. However, with such arrangement, accurate indication of a residual amount of fuel cannot be achieved, with the result that the indication of residual fuel may have to be given at 20% or thereabouts, which is considered an undesirable factor.

In the preferred embodiment of the present invention, therefore, in view of the aforesaid trouble, as shown in Fig. 12, a bottom portion 5B formed either integral with the external casing 5 or separately formed, may be provided with a recess 5C in a position lower than the support portion of the lower end 6A of the resistance body 6. Owing to this arrangement, dust or impurities entering the external casing 5 through the orifice 5A may be accumulated at said recess 5C without becoming heaped at the lower end of the resistance body. Thus it becomes possible to prevent the shorting or impairment of the resistance body 6 due to impurities entering the external casing as is often the case with the conventional system and to permit measurement of the residual fuel down to the end in a satisfactory manner. The shape of said recess 5C has only to be so arranged and suitably inclined so as to support the lower end 6A of the resistance body whilst permitting the accumulation of impurities at said recess 5C in a natural manner.

According to the preferred embodiment of the present invention, as explained above, since the bottom of the external casing is formed into a recess for the accumulation of impurities, it is possible to protect the lower end of the resistance body from damage and preferably, to enhance the accuracy of measurement of the residual amount of fuel, thereby furthering improvements in the reliability of this kind of fuel gauge.

## Claims

1. A liquid fuel level gauge having a vertically set elongate resistance body (6), a float (22, 22A) having a hole (24, 28) through which the resistance body (6) passes, and a contact member (7) supported on the float (22) and having electrical contact fingers (9 to 12) engaging the resistance body (6), whereby the effective electrical resistance of the resistance body (6) depends upon the position of the float (22) along the resistance body and provides an indication of the liquid level so detected by the float, characterised in that the contact fingers (9 to 12) extend substantially perpendicular to the direction of sliding along the resistance body (6) and engage opposite faces of the substantially flat resistance body (6) in opposing relationship, and in that the hole (28) provided in the float (22A) or a hole (19) in a support block (16) via which the contact member (7) is attached to the float (22) is only slightly larger than the cross section of the resistance body (6) and thereby acts as a guide hole guiding the sliding movement of the contact member (7).

2. A gauge according to claim 1, in which the contact member (7) has a base (8) which is also substantially perpendicular to the direction of sliding and from which the contact fingers (9 to 12) are bent and the resistance body extends with clearance through a hole (14) in the base (8).

3. A gauge according to claim 2, in which the base (8) of the contact member is generally rectangular in shape and the contact fingers (9 to 12) are four in number and extend in twos towards one another from the corners of the base (8).

4. A gauge according to claim 1, 2 or 3, in which the contact member (7) is formed as an integral body from resilient metal plate.

5. A gauge according to any of claims 1 to 4, in which the support block (16) or the float (22A) has a bottom in which the guide hole (19 or 28) is formed and side walls (17, 18) within which the contact member (7) is received.

6. A gauge according to any of claims 1 to 5, in which the support block (16) or the float (22A) has projections (21 or 30) which engage the contact fingers (9 to 12) adjacent the roots thereof to urge the contacts (13) into engagement with the opposite faces of the resistance body (6).

7. A gauge according to claim 6, in which the projections (21 or 30) are integrally formed with the support block (16) or the float (22A).

8. A gauge according to claim 6, in which the projections are adjustable in position to adjust the contact fingers (9 to 12).

9. A gauge according to any of claims 1 to 8, in which the support block (16) is received in a groove (23) in the float (22).

10. A gauge according to any of claims 1 to 9, in which the contacts (13) on the free ends of the contact fingers are of oval or oblong configuration extending in the direction of sliding.

11. A gauge as claimed in any of claims 1 to 10, in which the contact fingers are of differing lengths and/or mass.

12. A gauge as claimed in any of claims 1 to 11, in which the resistance body (6), the float (22 or 22A) and the contact member (7) are received in an external casing (5) provided with orifices (5A) adjacent its upper and lower ends.

13. A gauge as claimed in claim 12, in which the casing has a bottom portion (5B) which is inclined downwardly outwardly away from the lower end (6A) of the resistance body.

## Patentansprüche

1. Flüssigbrennstoffstandsmesser mit einem vertikal angeordneten länglichen Widerstandskörper (6), einem Schwimmer (22, 22A) mit einer Öffnung (24, 28), durch die der Widerstandskörper (6) verläuft, und einem von dem Schwimmer (22) getragenen Kontaktglied (7) mit an dem Widerstandskörper (6) angreifenden Kontaktfingern (9 bis 12) zur Herstellung eines elektrischen Kontakts, wobei der effektive elektrische Widerstand des Widerstandskörpers (6) von dem Stand des Schwimmers (22) entlang des Widerstandskörpers abhängt und eine Angabe des auf diese Weise durch den Schwimmer festgestellten Flüssigkeitsstands liefert, dadurch gekennzeichnet, daß die Kontaktfinger (9 bis 12) sich im wesentlichen senkrecht zur Gleitrichtung längs des Widerstandskörpers (6) erstrecken und an gegenüberliegenden Stirnseiten des im wesentlichen flachen Widerstandskörpers (6) in gegenüberliegender Anordnung angreifen und daß die in dem Schwimmer (22A) ausgebildete Öffnung (28) oder eine Öffnung (19) in einem Halteblock (16), über den das Kontaktglied (7) an dem Schwimmer (22) angebracht ist, nur etwas größer ist als der Querschnitt des Widerstandskörpers (6) und dadurch wie eine die Gleitbewegung des Kontaktgliedes (7) führende Führungsöffnung wirkt.

2. Flüssigbrennstoffstandsmesser nach Anspruch 1, dadurch gekennzeichnet, daß das Kontaktglied (7) eine Basis (8) aufweist, die ebenfalls im wesentlichen senkrecht zur Gleitrichtung angeordnet ist und von der aus sich die Kontaktfinger (9 bis 12) biegen, und daß sich der Widerstandskörper mit lichtem Abstand durch eine Öffnung (14) in der Basis (8) erstreckt.

3. Flüssigbrennstoffstandsmesser nach Anspruch 2, dadurch gekennzeichnet, daß die Basis (8) des Kontaktgliedes im allgemeinen rechteckig geformt ist und die Kontaktfinger (9 bis 12) vier in ihrer Anzahl sind und sich von den Ecken der Basis (8) aus in Paaren zueinander hin erstrecken.

4. Flüssigbrennstoffstandsmesser nach Anspruch 1, 2 oder 3, dadurch gekennzeichnet, daß das Kontaktglied (7) einstückig aus einer elastischen Metallplatte geformt ist.

5. Flüssigbrennstoffstandsmesser nach einem der Ansprüche 1 bis 4, dadurch gekennzeichnet, daß der Halteblock (16) oder der Schwimmer (22A) einen Boden, in den die Führungsöffnungen (19 oder 28) eingeformt sind, und Seitenwände (17, 18) aufweist, innerhalb derer das Kontaktglied (7) aufgenommen ist.

6. Flüssigbrennstoffstandsmesser nach einem der Ansprüche 1 bis 5, dadurch gekennzeichnet, daß der Halteblock (16) oder der Schwimmer (22A) Vorsprünge (21 oder 30) aufweisen, die den Kontaktfingern (9 bis 12) in deren Wurzelbereichen anliegen, um die Kontaktenden (13) zur Anlage an die gegenüberliegenden Stirnflächen des Widerstandskörpers (6) zu zwingen.

7. Flüssigbrennstoffstandsmesser nach Anspruch 6, dadurch gekennzeichnet, daß die Vorsprünge (21 oder 30) einstückig mit dem Halteblock (16) oder dem Schwimmer (22A) ausgebildet sind.

8. Flüssigbrennstoffstandsmesser nach Anspruch 6, dadurch gekennzeichnet, daß die Vorsprünge zum Anpassen der Kontaktfinger (9 bis 12) in ihrer Lage verstellbar sind.

9. Flüssigbrennstoffstandsmesser nach einem der Ansprüche 1 bis 8, dadurch gekennzeichnet, daß der Halteblock (16) in eine Nut (23) des Schwimmers (22) aufgenommen ist.

10. Flüssigbrennstoffstandsmesser nach einem der Ansprüche 1 bis 9, dadurch gekennzeichnet, daß die Kontaktenden (13) an den freien Enden der Kontaktfinger von ovaler oder länglicher, sich in die Gleitrichtung erstreckender Gestalt sind.

11. Flüssigbrennstoffstandsmesser nach einem der Ansprüche 1 bis 10, dadurch gekennzeichnet, daß die Kontaktfinger verschiedene Längen und/oder Massen aufweisen.

12. Flüssigbrennstoffstandsmesser nach einem der Ansprüche 1 bis 10, dadurch gekennzeichnet, daß der Widerstandskörper (6), der Schwimmer (22 oder 22A) und das Kontaktglied (7) in einem mit Öffnungen (5A) bei seinem oberen und unteren Ende versehenen äußeren Gehäuse (5) angeordnet sind.

13. Flüssigbrennstoffstandsmesser nach Anspruch 12, dadurch gekennzeichnet, daß das Gehäuse einen Bodenteil (5B) aufweist, der vom unteren Ende (6A) des Widerstandskörpers nach außen abwärts geneigt ist.

## Revendications

1. Jauge à essence liquide ayant un corps de résistance (6) allongé disposé verticalement, un flotteur (22, 22A) avec un orifice (24, 28) traversé par le corps de résistance (6), et un élément de contact (7) monté sur le flotteur (2) et comportant des doigts de contact électrique (9 à 12) engagés dans le corps de résistance (6), dans laquelle la résistance électrique effective du corps de résistance (6) dépend de la position du flotteur (22) par rapport au corps de résistance, et fournit une indication du niveau de liquide ainsi détecté par le flotteur, caractérisée en ce que les doits de contact (9 à 12) s'étendent sensiblement perpendiculairement à la direction de glissement le long du corps de résistance (6), et sont en prise, en opposition, avec des faces opposées du corps de résistance (6) sensiblement plat, et en ce que l'orifice (28) réalisé dans le flotteur (22a), ou bien un orifice (19) pratiqué dans un bloc support (16) par lequel l'élément de contact (7) est attaché au flotteur (22), n'est que légèrement plus grand que la section transversale du corps de résistance (6), et joue ainsi un rôle de guidage du mouvement de glissement de l'élément de contact (7).

2. Jauge selon la revendication 1, dans laquelle l'élément de contact (7) a une embase (8) qui est également sensiblement perpendiculaire à la direction de glissement, et à partir de laquelle sont recourbés les doigts de contact (9 à 12), et le corps de résistance traverse avec jeu un orifice (14) pratiqué dans l'embase (8).

3. Jauge selon la revendication 2, dans laquelle l'embase (8) de l'élément de contact est essentiellement de forme rectangulaire et les doigts de contact (9 à 12) sont au nombre de quatre, et s'étendent dirigés l'un vers l'autre par paires, à partir des coins de l'embase (8).

4. Jauge selon la revendication 1, 2 ou 3, dans laquelle l'élément de contact (7) est réalisé en une seule pièce dans une plaque métallique élastique.

5. Jauge selon l'une quelconque des revendications 1 à 4, dans laquelle le bloc support (16), ou bien le flotteur (22A), a une base dans laquelle est formée l'orifice de guidage (19 ou 28), et des parois latérales (17, 18) à l'intérieur desquelles est reçu l'élément de contact (7).

6. Jauge selon l'une quelconque des revendications 1 à 5, dans laquelle le bloc support (16), ou bien le flotteur (22A) a des parties en saillies (21 ou 30) qui viennent en prise avec les doigts de contact (9 à 12) à proximité de leurs bases, de façon à forcer les contacts (13) en prise avec les faces opposées du corps de résistance (6).

7. Jauge selon la revendication 6, dans laquelle les parties en saillie (21 ou 30) font corps avec le bloc support (16) ou bien le flotteur (22A).

8. Jauge selon la revendication 6, dans laquelle les parties en saillie sont de position réglable, de façon à réaliser l'ajustement des doigts de contact (9 à 12).

9. Jauge selon l'une quelconque des revendications 1 à 8, dans laquelle le bloc support (16) est reçu dans une rainure (23) pratiquée dans le flotteur (22).

10. Jauge selon l'une quelconque des revendications 1 à 9, dans laquelle les contacts (13) aux extrémités libres des doigts de contact sont de formes ovale ou oblongue, et s'étendent dans la direction de glissement.

11. Jauge telle que revendiquée dans une quelconque des revendications 1 à 10, dans laquelle les doigts de contact sont de longueurs et/ou de masses différentes.

12. Jauge telle que revendiquée dans une quelconque des revendications 1 à 11, dans laquelle le corps de résistance (6), le flotteur (22 ou 22A) et l'élément de contact (7) sont reçus dans un boîtier externe (5) pourvu d'orifices (5A) à proximité de ses extrémités supérieure et inférieure.

13. Jauge telle que revendiquée en revendication 12, dans laquelle le boîtier présente une base (5B) s'inclinant extérieurement vers le bas à partir de l'extrémité inférieure (6A) du corps de résistance.

## FIG. 1

## FIG. 2

Indicated Value →

Fuel Level →

H2

H1

3

1

4

2

## FIG. 4

26

22

6A

S

7

9

5

6

24

S

16

23

11

FIG.3

S

S

5

6

9

7

8

11

15

12

10

16

20

19

23

24

22

25

18

19

16

21

21

17

17

A

W

20

20

B

21

21

18

FIG.5

0 038 894

FIG.6

FIG.7

FIG. 8

FIG.9

FIG.11

FIG.10

FIG.12